Europäisches Patentamt

European Patent Office

Office européen des brevets

(11) Publication number: **0 426 644 A1**

# EUROPEAN PATENT APPLICATION

(21) Application number: 90870206.1

(22) Date of filing: 30.10.90

(51) Int. Cl.⁵: **C08F 110/04**, C08F 110/14, C08F 4/602

(30) Priority: 30.10.89 EP 89870165

(43) Date of publication of application:
**08.05.91 Bulletin 91/19**

(84) Designated Contracting States:
**AT BE CH DE DK ES FR GB GR IT LI LU NL SE**

(71) Applicant: **FINA RESEARCH S.A.**
**Zone Industrielle C**
**B-7181 Feluy(BE)**

(72) Inventor: **Haspeslagh, Luc**
**Kattebroekstraat 73**
**B-1710 Dilbeek(BE)**
Inventor: **Folie, Pascal**
**Rue de Binche 35**
**B-6180 Courcelles(BE)**

(54) Syndiotactic homopolymers of olefins.

(57) Homopolymers of olefins having from 4 to 10 carbon atoms in which the microstructure of the polymer chain consists of blocks of repeating recemic dyads predominantly connected by units consisting of a meso triads. Also disclosed is a process for preparing said homopolymers by metallocene catalysis using an asymmetric bridged dicyclopentadienyl derivative of a metal of groups 4b, 5b or 6b.

EP 0 426 644 A1

## SYNDIOTACTIC HOMOPOLYMERS OF OLEFINS

The present invention relates to homopolymers of olefins having a novel stereoregular microstructure and more particularly to olefins homopolymers in which the microstructure of the side chains relative to the polymer is highly syndiotactic. More particularly the present invention relates to highly syndiotactic homopolymers of olefins having from 4 to 10 carbon atoms.

As is well known, olefins polymers such as polybutene, polypentene are generally produced by techniques such as radical polymerization, anionic polymerization, cationic polymerization and polymerization using a Zieglertype catalyst. These polymers are divided into three groups, isotactic, syndiotactic and atactic polymers, depending on the steric configuration of side chains thereof. It has heretofore been known that usual radical, anionic and cationic polymerization methods provide olefins homopolymers having mainly an atactic structure, and that the polymerization methods using a Ziegler-type catalyst provide olefin homopolymers having mainly an isotactic or atactic structure.

The isotactic structure is typically described as having the methyl groups attached to the tertiary carbon atoms of successive monomeric units on the same side of a hypothetical plane through the main chain of the polymer, e.g., the methyl groups are all above or below the plane. Using the Fischer projection formula, the stereochemical sequence of isotactic polybutene is described as follows :

Another way of describing the structure is through the use of NMR. Bovey's NMR nomenclature for an isotactic pentad is ...mmmm... with each "m" representing a "meso" dyad or successive methyl groups on the same side in the plane. As known in the art, any deviation or inversion in the structure of the chain lowers the degree of isotacticity of the polymer.

In contrast to the isotactic structure, syndiotactic polymers are those in which the methyl groups attached to the tertiary carbon atoms of successive monomeric units in the chain lie on alternate sides of the plane of the polymer. Using the Fischer projection formula, the structure of a syndiotactic polymer is designated as :

In NMR nomenclature, this pentad is described as ...rrrr... in which each "r" represents a "racemic", dyad, i.e. methyl groups on alternate sides of the plane. The percentage of r dyads in the chain determines the degree of syndiotacticity of the polymer. A number of methods of preparing olefin homopolymers and their structures have been reported. However, preparation of homopolymers of olefins having from 4 to 10 carbon atoms of very high syndiotactic structure has not yet been disclosed.

The present invention provides homopolymers of olefins having from 4 to 10 carbon atom having a very high syndiotactic index and with a novel syndiotactic microstructure. The novel microstructure for the syndiotactic homopolymers of olefins included within the present invention has blocks of repeating racemic (r) dyads connected by units predominantly consisting of a pair of meso (m) dyads, i.e., a meso triad "mm." The predominant structure of the polymer chain is described in NMR nomenclature as ... rrrmmrrr ... Preferably, the polymer chain consists of greater than 70% racemic dyads, most preferably, greater than 80% racemic dyads, and the deviations from the repeating racemic pattern are predominantly meso triads.

The present invention relates to a homopolymer of olefins having from 4 to 10 carbon atoms having a repeating unit represented by the general formula (I):
$CH_2 = CH\text{-}C_nH_{2n+1}$ wherein n = 2 to 8 having a degree of polymerization of not less than 5, and having a stereoregular structure which is mainly syndiotactic.

The novel microstructure is obtained through use of a stereorigid metallocene catalyst described by the formula :
$R''(CpR_n)(CpR'_m)MeQ_k$
wherein each Cp is a cyclopentadienyl or substituted cyclopentadienyl ring; each $R_n$ and $R'_m$ is the same or different and is a hydrocarbyl radical having 1-20 carbon atoms; $R''$ is a structural bridge between the two Cp rings imparting stereorigidity to the catalyst; Me is a transition metal; and each Q is a hydrocarbyl radical or is a halogen. Further, $R'_m$ may be selected so that $(CpR'_m)$ is a substantially different substituted cyclopentadienyl ring than $(CpR_n)$. It was discovered that the use of a metallocene catalyst as described above with cyclopentadienyl ligands that are substantially different in terms of their substituents,and thus their electrical and steric effects, produces not only a predominantly syndiotactic polymer rather than an isotactic polymer but also syndiotactic polyolefin having the novel microstructure described above.

The novel microstructure of syndiotactic polyolefin is obtained by utilizing at least one of the catalysts described by the above formula and introducing the catalyst into a polymerization reaction zone containing olefin monomer. In addition, an electron donor compound and/or a cocatalys t such as alumoxane may be introduced into the reaction zone. Further, the catalyst may also be pre-polymerized prior to introducing it into the reaction zone and/or prior to the stabilization of reaction conditions in the reactor.

The present invention also includes a process for producing syndiotactic homopolymers of olefin having from 4 to 10 carbon atoms in accordance with the invention.

## DETAILED DESCRIPTION

The polymers of olefins of the present invention have a structure unit (repeating unit) represented by the above general formula (1) and include, as well as polybutene, polypentene, poly(4-methylpentene), polyhexene, polyheptene, polyoctene, polynonene and polydecene. This novel structure of the homopolymers of olefins of the invention consists predominantly of the structure described in NMR nomenclature as ... rrrmmrrrr... and consists of a very high percentage of racemic dyads. The polymer is can be produced to varying specifications for melting points, molecular weights, and molecular weight distributions. The tacticity of the homopolymers of olefins having from 4 to 10 carbon atoms is determined by the nuclear magnetic resonance (NMR ) method. In more detail, the tacticity of the homopolymers of olefins is determined by analyzing the signal of C, and the signal of methyl-methylene carbon in NMR (nuclear magnetic resonance spectrum as measured using an isometric carbon), or the proton signal o H-NMR. The tacticity can be determined by NMR for each given number of constituting units connected continuously, such as a diad in which the number of constituting units is two, a triad in which the number of constituting units is three, and a pentad in which the number of constituting units is five. The term "polymer having mainly a syndiotactic structure" as used herein means that the polymer has such a syndiotactic structure that the syndiotacticity expressed in terms of the diad is not less than 70% and more particularly not less than 80%. The metallocene catalysts of the present invention may be described by the formula $R''(CpR_n)(CpR'_m)$

$MeQ_k$ wherein each Cp is a cyclopentadienyl or substituted cyclopentadienyl ring; $R_n$ and $R_m$ are hydrocarbyl radicals having 1-20 carbon atoms, each $R_n$ may be the same or different; $R''$ is a structural bridge between the two Cp rings imparting stereorigidity to the catalyst, and $R''$ is preferably selected from the group consisting of an alkyl radical having 1-4 carbon atoms or a hydrocarbyl radical containing silicon, germanium, phosphorus, nitrogen, boron, or aluminum; Me is a group 4b, 5b, or 6b metal from the Periodic Table of Elements; each Q is a hydrocarbyl radical having 1-20 carbon atoms or is a halogen; $0 \leq k \leq 3$. $0 \leq n \leq 4$; and $1 \leq m \leq 4$. In order to be syndio-specific, it was discovered that the catalysts must have substantially different Cp ring substituents. Therefore, $R'_m$ is selected such that $(CpR'_m)$ is a substantially different substituted ring than $(CpR_n)$. In order to produce a syndiotactic polymer, the characteristics of the groups substituted directly on the cyclopentadienyl rings seem to be important. Where there is a substantial difference in the characteristics of the ring substituants, either electrical, steric or other difference resulting in a substantially different effect on the metal complex as compared with symmetrical rings, then the catalyst can be expected to produced predominantly syndiotactic polymers.

In a preferred catalyst useful in producing polymers of the present invention, Me is titanium, zirconium, hafnium or vanadium; Q is preferably a halogen, and it is most preferably chlorine; and k is preferably 2, but it may vary with the valence of the metal atom. Exemplary hydrocarbyl radicals include methyl, ethyl, propyl, isopropyl, butyl, isobutyl, amyl, isoamyl, hexyl, heptyl, octyl, nonyl, decyl, cetyl, phenyl, and the like. Other hydrocarbyl radicals include other alkyl, aryl, alkenyl, alkylaryl or arylalkyl radicals. Further, $R_n$ and $R'_m$ may include hydrocarbyl radicals attached to a single carbon atom in the Cp ring as well as radicals that are bonded to two carbon atoms in the ring. A preferred catalyst is isopropyl(fluorenyl) (cyclopentadienyl) Zr dichloride.

The catalyst may be prepared by any method known in the art. The Examples below disclose two methods of preparing the catalysts with the second method being preferred as it produces a more stable and active catalyst. It is important that the catalyst complex be "clean" as usually low molecular weight, amorphous polymer is produced by impure catalysts. Generally, the preparation of the catalyst complex consists of forming and isolating the Cp or substituted Cp ligands which are then reacted with a halogenated metal to form the complex.

The metallocene catalysts of the present invention are useful in many of the polymerization processes known in the art including many of those disclosed especially for the use of isotactic polyolefins. When the catalysts of the present invention are used in these types of processes, syndiotactic polymers are produced rather than isotactic polymers. A preferred polymerization procedure includes the step of prepolymerizing the catalyst and/or precontacting the catalyst with a cocatalyst and an olefin monomer prior to introducing the catalyst into a reaction zone.

Consistent with the prior disclosures of metallocene catalysts for the production of isotactic polymers, the catalysts of the present invention are particularly useful in combination with an aluminum cocatalyst, preferably an alumoxane, an alkyl aluminum, or a mixture thereof. In addition, a complex may be isolated between a metallocene catalyst as described herein and an aluminum cocatalyst in accordance with the teachings of European Patent Publication no. 226,463 published on June 24, 1987 and assigned to Exxon Chemical Patents Inc. with Howard Turner listed as the inventor, the disclosure of which is hereby incorporated by reference. The alumoxanes useful in combination with the catalysts of the present invention may be represented by the general formula (R-Al-O-) in the cyclic form and $R(RAl-O)_n-ALR2$ in the linear form wherein R is an alkyl group with one to five carbon atoms and n is an integer from 1 to about 20. Most preferably, R is a methyl group. The alumoxanes can be prepared by various methods known in the art. Preferably, they are prepared by contacting water with a solution of trialkyl aluminum, such as, trimethyl aluminum, in a suitable solvent such as benzene. Another preferred method includes the preparation of alumoxane in the presence of a hydrated copper sulfate as described in U.S. Patent No. 4,404,344 the disclosure of which is hereby incorporated by reference. This method comprises treating a dilute solution of trimethyl aluminum in toluene with copper sulfate. The preparation of other aluminum cocatalysts useful in the present invention may be prepared by methods known to those skilled in the art.

The Examples given below illustrate the present invention and its various advantages and benefits in more detail. Synthesis procedures are described for zirconium metallocene catalysts. The general catalyst formula for the catalyst produced by these methods is isopropyl(fluorenyl)-(cyclopentadienyl) $ZrCl_2$.

## PREPARATION OF THE CATALYST - METHOD A

The synthesis procedures for the catalyst were performed under an inert gas atmosphere using a Vacuum Atmospheres glovebox or Schlenk techniques. The synthesis process generally comprises the steps of 1) preparing the halogenated or alkylated metal compound, 2) preparing the ligand, 3) synthesizing the complex, and 4) purifying the complex.

In Method A, the halogenated metal compound was prepared using tetrahydrofuran ("THF") as a solvent resulting in THF bound in with the final catalyst complex. Specifically, $MeCl_4THF$ was prepared as described in Manzer, L., Inorg. Synth. , 21, 135-36 (1982). In the Examples below, Me is zirconium, but it may also include titanium or other transition metals.

The substituted dicyclopentadienyl ligand may be prepared using various processes known in the art depending upon the selection of the specific bridge or ring substituents. In the preferred embodiments shown in the Examples below, the ligand is 2,2-isopropyl-(fluorene)cyclopentadiene. To prepare this ligand, 44 gms (0.25 mol) of fluorene were dissolved in 350 ml THF in a round bottom flask equipped with a side arm and dropping funnel. Contained within the funnel were 0.25 mol of tri-methyl lithium ($CH_3Li$) in ether (1.4 M). The $CH_3Li$ was added dropwise to the fluorene solution and the deep orange-red solution was stirred for several hours. After gas evolution had ceased, the solution was cooled to -78° C and 100 ml of THF containing 26.5 gms (0.25 mol) of 6,6-dimethylfulvene was added dropwise to the solution. The red solution was gradually warmed to room temperature and stirred overnight. The solution was treated with 200 ml of water and stirred for ten minutes. The organic fraction of the solution was extracted several times with 100 ml portions of diethylether, and the combined organic phases were dried over magnesium sulfate. Removal of the ether from the organic phases left a yellow solid which was dissolved in 500 ml of chloroform and recrystallized by addition of excess methanol at 2° C to yield a white powder.

The elemental analysis of the ligand showed carbon to be 91.8% by weight of the compound and hydrogen to be 7.4% by weight. This corresponds to the weight percentages for $C_{21}H_{20}$, of 92.6% for carbon and 7.4% for hydrogen. The NMR spectrum for the ligand establishes the structure to include one cyclopentadienyl ring attached by an isopropyl bridge to a second cyclopentadienyl ring that is substituted to form a fluorenyl radical.

A syndiospecific catalyst complex was synthesized using the ligand and the metal tetrachloride-THF complex. The catalyst was formed by adding 0.05 mol of N-butyl lithium and hexane (1.6M) was added dropwise to a 100 ml THF solution containing 6.8 gms (0.025 mol) of the Cp ligand described above. The solution was stirred at 35° C for twelve hours after which 9.4 gms (0.025 mol) of ZrCl₄-2THF contained in 200 ml of THF were rapidly cannulated together with the ligand solution into a 500 ml round bottom flask with vigorous stirring. The deep orange-red solution was stirred for twelve hours under reflux. A mixture of LiCl and a red solid were isolated by removing the solvents under vacuum.

Catalyst complexes produced in accordance with Method A are noted to be somewhat impure and extremely air and moisture sensitive. In the Examples below, Method A catalysts were purified using one or more of the following purification procedures :

1. Extraction with pentane. Trace quantities of a yellow impurity contained in the solid red catalyst complex were repeatedly extracted with pentane until the pentane became colorless.

2. Fractional recrystallization. The red complex was separated from the white LiCl by dissolving it in 100 ml of toluene, filtering it through a fine porosity sintered glass frit, and forming a saturated solution by adding pentane. The red zirconium complex was isolated using crystallization at - 20° C.

3. Chromotography on bio-beads. 50 gms of bio-beads SM-2 (20-50 mesh spherical, macroreticular styrene-divinylbenzene copolymer from Bio-Rad laboratories) were dried under vacuum at 70° C for 48 hours in a 30 x 1.5 centimeter column. The beads were then equilibriated with toluene for several hours. A concentrated solution of the red catalyst complex in toluene was eluded down the column with 150-200 ml of toluene. The complex was recovered by evaporating the toluene under vacuum.

The homopolymer having very high syndiotactic structure of the present invention is not always required to be a single compound.

The examples below illustrate the present invention in more details.

EXAMPLE 1

A dried 1.5 1 glass reactor equipped with inclined stirrer was filled under nitrogen flow with 1 1 of butene monomer. To this, were injected a solution of 4 mg isopropylene fluorenyl cyclopentadienyl zirconium dichloride in 20 ml of a 10 wt % solutions of MAO in toluene previously precontacted in a glove box under nitrogen. The reactor was thermostated at 60° C and was left polymerising for 1 hour. Finally, the polymer was obtained by evaporation of the monomer under reduced pressure in a rotovap. 40 g of polymeric material was collected with an Mn 9727 and a molecular weight dispersion Mw/Mn = 1.894. DSC analysis give a glass transition temperature of -16.64° C. The degree of syndiotacticity measured by 13C-NMR was equal to 75 (rrrr CH₂(1)).

EXAMPLE 2

A dried 1.5 1 glass reactor equipped with inclined stirrer was filled under nitrogen flow with 1 1 of pentene monomer. To this, were injected a solution of 8 mg isopropylene fluorenyl cyclopentadienyl zirconium dichloride in 40 ml of a 10 wt % solutions of MAO in toluene previously precontacted in a glove box under nitrogen. The reactor was thermostated at 60° C and was left polymerising for 1 hour. Finally, the polymer was obtained by evaporation of the monomer under reduced pressure in a rotovap. 90 g of polymeric material was collected with an Mn = 16627 and a molecular weight dispersion Mw/Mn 2.366. DSC analysis give a glass transition temperature of -26.81° C. The degree of syndiotacticity measured by ¹³C-NMR was equal to 73 (rrrr CH₂(1)).

EXAMPLE 3

A dried 1.5 1 glass reactor equipped with inclined stirrer was filled under nitrogen flow with 1 1 of hexene monomer. To this, were injected a solution of 8 mg isopropylene fluorenyl cyclopentadienyl zirconium dichloride in 40 ml of a 10 wt % solutions of MAO in toluene previously precontacted in a glove box under nitrogen. The reactor was thermostated at 60° C and was left polymerising for 1 hour. Finally, the polymer was obtained by evaporation of the monomer under reduced pressure in a rotovap. 45 g of polymeric material was collected with an Mn 8569 and a molecular weight dispersion Mw/Mn = 1.905. DSC analysis give a glass transition temperature of -32.19° C. The degree of syndiotacticity measured by 13C-NMR was equal to 80 (rrrr CH₂(1)).

**Claims**

1. Syndiotactic homopolymer of olefin having from 4 to 10 carbon atoms in which the microstructure of the polymer chain consists of blocks of repeating racemic (r) dyads being predominantly connected by units consisting of a meso triad (mm).

2. Syndiotactic homopolymer of olefin of claim 1 wherein the polymer structure consists of greater than 70% racemic (r) dyads.

3. Syndiotactic homopolymer of olefin of claim 1 wherein the polymer structure consists of greater than 80% racemic (r) dyads.

4. Syndiotactic homopolymer of olefin of claim 1 wherein the olefin is selected from the group consisting of 1-butene, 1-pentene, 4-methylpentene, 1-hexene, 1-heptene, 1-octene, 1-nonene and 1-decene.

5. A process for polymerizing an olefin monomer having from 4 to 10 carbon atoms to form a syndiotactic polyolefin, said process comprising :

a) selecting a metallocene catalyst described by the formula $R''(CpR_n)(CpR'_m)$ $MeQ_k$ wherein each Cp is a cyclopentadienyl or substituted cyclopentadienyl ring; each $R_n$ is the same or different and is hydrocarbyl radicals having 1-20 carbon atoms; each $R'_m$ is the same or different and is a hydrocarbyl radical having 1-'20 carbon atoms; $R''$ is a structural bridge between the Cp rings imparting stereorigidity to the catalyst, Me is a group 4b, 5b, or 6b metal from the Periodic Table of Elements; each Q is a hydrocarbyl radical having 1-20 carbon atoms or is a halogen; $0 \leq k \leq 3$. $0 \leq n \leq 4$. and $1 \leq m \leq 4$. and wherein $R'_m$ is selected such that $(CpR'_m)$ is a sterically different ring than $(CPRm)$; and

b) introducing the metallocene catalyst into a polymerization reaction zone containing an olefin monomer having from 4 to 10 carbon atoms, and an aluminium compound as co-catalyst;

c) maintaining the reaction zone under polymerization reaction conditions.

European
Patent Office

Application Number

**EUROPEAN SEARCH REPORT**

**EP 90 87 0206**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | JOURNAL OF THE AMERICAN SOCIETY, vol. 110, 1988, pages 6255-6256, American Chemical Society; J.A. EWEN et al.: "Syndiospecific propylene polymerizations with group 4 metallocenes" * Whole article * | 5 | C 08 F 110/04 C 08 F 110/14 C 08 F 4/602 |
| P,X | EP-A-0 351 392 (FINA TECHN.) * CLaims * | 1,5 | |
| P,X | EP-A-0 387 609 (HIMONT) * Claims * | 1,4,5 | |
| P,X | EP-A-0 387 691 (HOECHST) * Whole document * | 1,4,5 | |

| | | | TECHNICAL FIELDS SEARCHED (Int. Cl.5) |
|---|---|---|---|
| | | | C 08 F |

The present search report has been drawn up for all claims

| Place of search | Date of completion of search | Examiner |
|---|---|---|
| The Hague | 07 February 91 | DE ROECK R.G. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document